# EUROPEAN PATENT APPLICATION

(11) **EP 2 383 959 A1**
(43) Date of publication of application: **02.11.2011**
(21) Application number: 10305442.5
(22) Date of filing: 27.04.2010
(51) Int. Cl.: H04L 29/08

(54) **A method, a system, a device, a server, a computer program and a computer program product for providing progression information in a communications network.**

(71) Applicant: Alcatel Lucent, 75008 Paris (FR)
(72) Inventor: Robinson, Julien, 92350 Le Plessis-Robinson (FR); Ebenreuter, Natalie, 92100 Boulogne-Billancourt (FR)
(74) Representative: Brose, Gerhard

(57) **Abstract**

A method, a system, a device, a server, a computer program and a computer program product for providing progression information in a communications network.

The invention concerns a method for distributing progression information in a communications network, wherein said progression information is determined depending on a piece of information about the display of data on a first device, and wherein said progression information is sent to said first device, a server or a second device.

## Description

### Field of the invention

The invention relates to a method, a system, a device, a server, a computer program and a computer program product for providing progression information in a communications network.

### Background

In an implementation, capable of providing progression information, for example an e-book reader displays pages of a document and a user reading said pages is frequently requested to input information about his reading progression to a user interface. Afterwards, said progression information is sent to a server or to another e-book reader in order to inform other users about the progression of reading said document.

Requesting said progression information from said user leads to frequent interruptions during the reading process.

### Summary

The object of the invention is thus to provide progression information in a communications network automatically.

The main idea of the invention is provide progression information in a communications network wherein said progression information is determined depending on a piece of information about the display of data on a first device and wherein said progression information 15 provided to said first device, a server or a second device. This way, the progression information is determined and provided without interrupting the reading of a user.

Advantageously, the piece of information is sent by said first device to a server and said progression information is determined by said server. This way, light e-book readers without a lot of processing power can be used while the server can determine progression information using its computing power.

Advantageously, said progression information is determined by said first device and sent from said first device to said server or said second device. This way, the progression information is sent directly to said server or said second device without having to compute the progression information on the receiving side.

Advantageously, said progression information is determined depending on the time said data is displayed on said first device. This way, progression information can be automatically determined without user interaction.

Advantageously, said progression information is determined depending on the data that is displayed on said first device. This way, the information can be determined automatically depending on the data, for example the number of words that is displayed on said first device.

Advantageously, a request to provide said progression information regarding said first device, in particular sent by said second device, is answered in particular by said first device or said server by sending said progression information, This way, said progression information can be requested at the time it is wanted by a user of said second device.

Further developments of the invention can be gathered from dependent claims and the following description.

### Brief description of the figures

In the following, the invention will be explained further, making reference to the attached drawings.
Fig. 1 schematically shows part of a communications network.
Fig. 2 schematically shows part of a first device or a second device.
Fig. 3 schematically shows part of a user interface displaying progression information.
Fig. 4 shows a first flowchart of a first method for providing progression information.
Fig. 5 shows a second flowchart of a second method for providing progression information.
Fig. 6 shows a third flowchart of a third method for providing progression information.

### Description of the embodiments

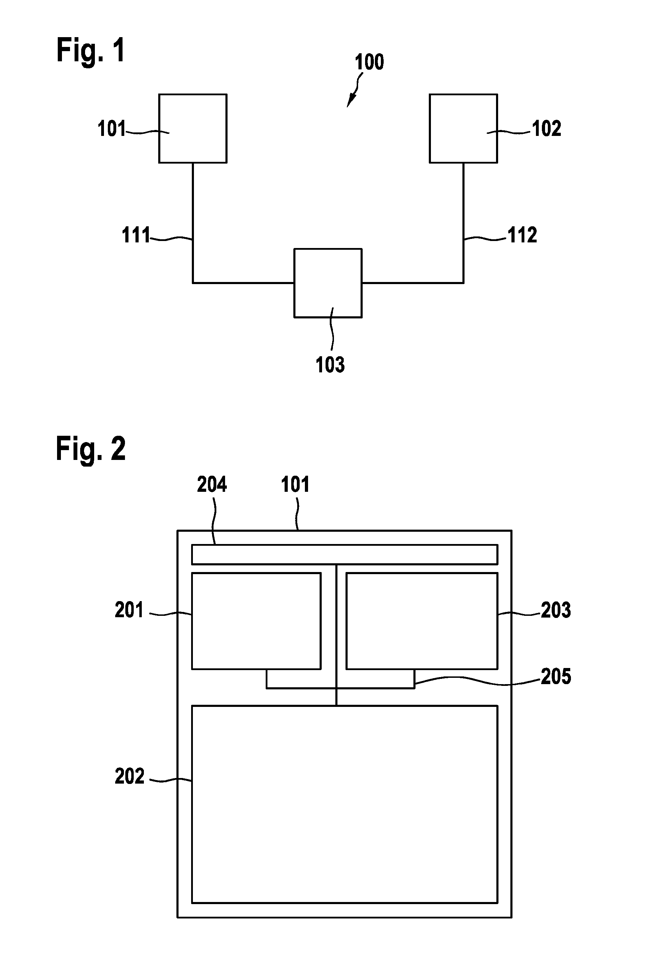

Fig. 1. shows part of a communications network 100. Said communications network 100 comprises a first device, for example a first e-book reader 101.

Furthermore, said communications network 100 comprises a second device, for example a second e-book reader 102.

Furthermore, said communications network 100 comprises a server 103.

Said communications network 100 comprises a first data link 111, for example a first wireless connection according to the well-known IEEE802.11 standard, connecting said first device 101 with said server 103.

Furthermore, said communications network 100 comprises a second data link 112, for example a second wireless connection according to the well-known IEEE802.11 standard, connecting said second device 102 and said server 103.

Additionally or alternatively, said first data link 111 or said second data link 112 may be any other type of connection. Particularly said first data link 111 or said second data link 112 may be Ethernet connections.

Alternatively, said first e-book reader 101, said second e-book reader 102 or said server 103 may be connected to each other via an internet link.

Fig. 2 schematically shows part of said first e-book reader 101 or said second e-book reader 102.

Said first e-book reader 101 or said second e-book reader 102 comprise a first user interface, for example a scroll wheel 201 and a second user interface, for example a display, 202.

Furthermore, said first e-book reader 101 or said second e-book reader 102 comprise processing means 203, for example a microcontroller, sending and receiving means 204, for example a wireless transceiver according to the IEEE802.11 standard and a third data link 205, for example a data bus connecting the first user interface, the second user interface, said processing means 203 and the sending and receiving means 205.

Additionally, said first e-book reader 101 or said second e-book reader 102 comprise a storage means, for example a non volatile storage.

An electronic document suited for displaying on said first e-book reader 101 or said second e-book reader 102 is stored on said non volatile storage. In order to display said electronic document on said display 203, said processing means 203 is adapted to calculate a page size, for example a portion of said electronic document that fits onto said display 202.

Furthermore, said processing means 203 is adapted to send said portion of said electronic document to said display 202 via said third data link 205 upon receipt of a trigger from said first user interface, for example said scroll wheel 201.

The trigger from said scroll wheel 101 is for example a Java-event, such as "scroll" or "display"' as defined by the display software jEdit (www.jedit.org).

Additionally said processing means 203 is adapted to determine an amount of words currently displayed on said display 202.

Methods for determining the amount of words on a currently displayed page are well-known to the person skilled in the art and not further explained here.

Additionally, said processing means 203 is adapted to determine the amount time that said page is displayed on said display 202. For example, said processing means 203 is adapted to initialize a timer and to increase said timer every second to determine the amount of seconds that said page is displayed on said display 202.

Additionally, said processing means 203 is adapted to determine a first message comprising said amount of words currently displayed on said page on said display 202 and a value of said timer. Said processing means 203 is for example adapted to send said first message to said server 103 via said third data link 205, said sending and receiving means 204 and said first data link 111.

Alternatively or additionally said processing means 203 is adapted to send said first message to said second e-book reader 102 directly.

Methods for sending and receiving messages, for example via said IEEE802.11 standards are well-known to a person skilled in the art and not explained further.

Additionally said processing means 203 is adapted to receive a second message comprising said progression information and a user identifier.

Furthermore, said processing means 203 is adapted to display said progression information and said user identifier on said second user interface, e.g. said display 202.

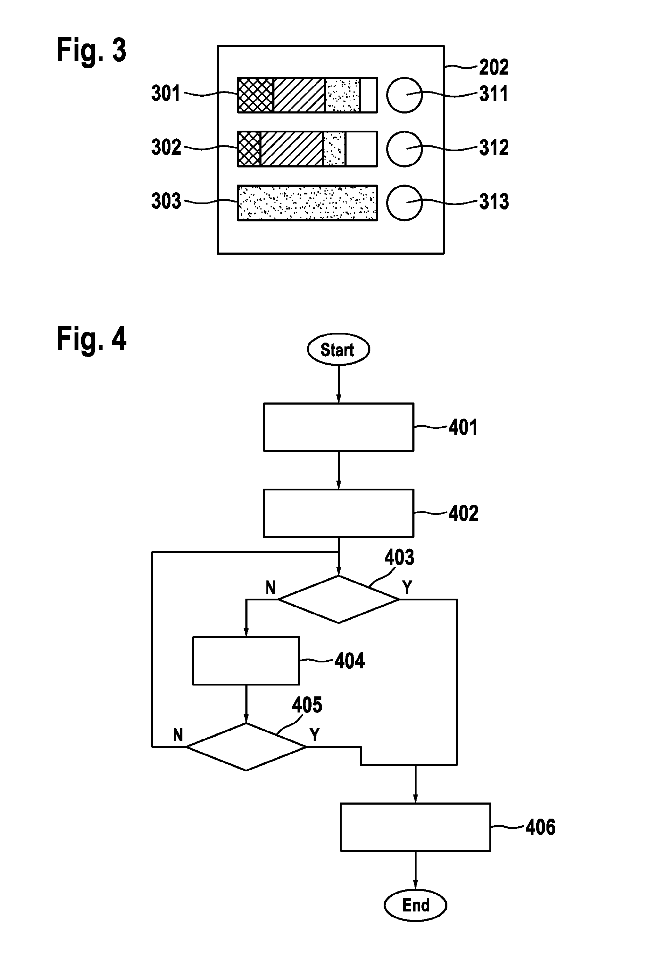

Fig. 3 schematically shows part of said display 202, displaying said progression information and said user identifier.

In the example given in Fig. 3, three distinct progression bars and three corresponding user identifiers are displayed on said display 202. Alternatively or additionally more or less than three progression bars may be displayed on said display 202.

The number of progression bars for example depends on the number of participants of a class in a classroom reading the same electronic document.

The first e-book reader 101, the second e-book reader 102 and any other e-book reader within the classroom may be adapted to share this progression information with each other. To that end any e-book reader and said server 103 may be configured in advance to enable the connection between one another.

This configuration step is for example executed by an administrator when installing the electronic document on the e-book readers.

Said processing means 203 is for example adapted to display said progression information every time said second message is received.

In case three e-book readers are connected, said processing means 203 is for example adapted to display a first progression bar 301, a second progression bar 302 and a third progression bar 303.

Furthermore, said processing means 203 is adapted to display a first user identifier 311, for example a name or an anonymous icon next to said first progression bar 301. Furthermore, said processing means 203 is adapted to display a second user identifier 312 and a third user identifier 313, for example names or anonymous icons next to said second progression bar 302 and said third progression bar 303 respectively.

Optionally, said processing means 203 may be adapted to display a key explaining the meaning of fields in said progression bars.

For example, said progression bars comprise a cross-hatched field indicating the amount of data a user has assimilated.

Furthermore, said progression bars may comprise a hatched field indicating the amount of data a user has read.

Furthermore, said progression bars may comprise a dotted field indicating the amount of data a user has skimmed.

Furthermore, said progression bars may comprise an empty field indicating the amount of data that was not read by the respective user.

The progression bars are for example indicating 100% of completion when filled entirely. To that end, the percentage of completion may be indicated increasingly from the left side of the progression bar to the right side of the progression bar.

Said progression information is for example determined by said server 103 upon receipt of said first message. To that end, said server 103 is adapted to receive said first message and to determine said progression information. Additionally, said server 103 is adapted to send said second message.

Alternatively, said progression information may be determined on said first e-book reader 101. In this case, said progression information may be sent to said server 103 for distribution or to said second e-book reader directly.

Alternatively, said progression information is determined by said second e-book reader 102 upon receipt of said first message.

In case of multiple e-book readers being connected, said progression information may be determined for each e-book reader separately, collected and sent out to each of the e-book readers in a batch process.

The amount of data being assimilated, read, skimmed or not read by a user may for example be calculated using the amount of time a certain page, i.e. a certain number of words, has been displayed on said display 202. For example, any page of said electronic document that has never been displayed on said display 202 contributes to the portion that is not read.

Furthermore, any page that has not been displayed for more than 150ms per word contributes to the amount of skimmed data.

Furthermore, any page that has been displayed for 150ms per word to 400ms per word is considered to be read by the respective user and hence contributes to the read portion.

For example any page that has been displayed for more than 400ms per word is considered to be carefully read and assimilated, and hence contributes to the assimilated portion.

Any other time limits and a more or less granular distinction between read and skimmed may be chosen, depending on the user's preference.

The progression information that is displayed is determined according to methods described now.

Fig. 4 shows a flowchart of a first method for providing progression information that starts whenever said data is displayed on said first device.

After the start a step 401 is executed.

In said step 401, said timer is initialized, for example to Zero. Afterwards, a step 402 is executed.

In said step 402, the amount of words on the page currently displayed is determined. Afterwards, a step 403 is executed.

In said step 403, a test is performed to determine whether a change of data to be displayed occurred. For example a check is performed to determine whether a trigger indicating a page flip request has been received from said first input device, e.g. said scroll wheel 201. In case no change of data has been performed, a step 404 is executed. Otherwise, a step 406 is executed.

In said step 404, said timer is increased, for example by 1 second. Afterwards step 405 is executed.

In said step 405, a test is performed to check whether said timer exceeds a predetermined value, for example 10 seconds. In case said timer exceeds said predetermined value, said step 406 is executed, otherwise said step 403 is executed.

In said step 406, said first message comprising said timer value and said amount of words is determined and sent, for example to said server 103. Afterwards, said first method ends.

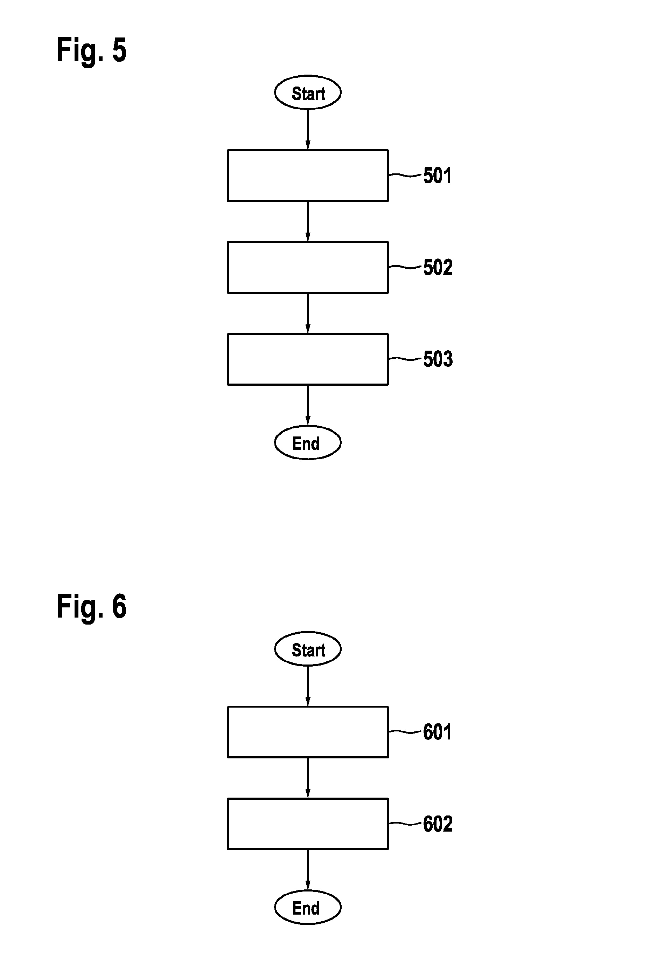

Fig. 5 shows a second flowchart of a second method for providing progression information.

Said second method starts, whenever said first message is received.

After the start a step 501 is executed.

In said step 501, said progression information is determined from said piece of information about the display of said data on said first device, For example, said progression information is determined from said timer value and said amount of words received in said first message. Afterwards, a step 502 is executed.

In said step 502, said user identification, for example said name is determined. Said user identification is for example determined from information about the sender of said first message, for example identifying said first e-book reader 101. Afterwards, a step 503 is executed.

In said step 503, said progression information and said user identification are sent in a second message, for example to said first e-book reader 101 or said second e-book reader 102. Afterwards, said second method ends.

Fig. 6 shows a flowchart of a third method for displaying said progression information.

Said third method starts whenever said second message is received, for example by said first e-book reader 101, said second e-book reader 102 or said server 103.

After the start, a start 601 is executed.

In said step 601, said progression information is displayed. For example, said progression bars are displayed on said display 202, using several fields indicating the level of reading. Afterwards, a step 602 is executed.

In said step 602, said user identification is displayed. For example, said name or said anonymous icon is displayed next to said progression bar. Afterwards, said third method ends.

Alternatively, said user identification is not displayed.

Said progression information may be displayed by said server 103 via a Web-interface as well.

Alternatively to using progression bars, any other type of progression indicator, like a pie chart, may be used.

The methods described above may be implemented as a computer program for providing progression information in a communications network, wherein said computer program, when executed on a computer, causes the computer to determine said progression information, depending on said piece of information about the display of data on said first device and to provide said progression information to said first device or said second device.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts and the like represent various processes which may be substantially represented in computer readable medium and so executed by a computer or processor, whether or not such computer or processor is shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described, methods.

## Claims

1. A method for providing progression information in a communications network, wherein said progression information is determined depending on a piece of information about the display of data on a first device, and wherein said progression information is provided in particular to said first device, a server or a second device.

2. The method according to claim 1, wherein said piece of information is sent by said first device to a server and wherein said progression information is determined by said server.

3. The method according claim 1, wherein said progression information is determined by said first device and wherein said progression information is sent from said first device to said server or to said second device.

4. The method according to claim 1, wherein said progression information is determined depending on the time said data is displayed on said first device.

5. The method according to claim 1, wherein said progression information is determined depending on the data that is displayed on said first device.

6. The method according to claim 1, wherein a request to provide said progression information regarding said first device, in particular sent by said second device, is answered, in particular by said first device or said server, by sending said progression information.

7. A system for providing progression information in a communications network, **wherein** a first device is adapted to determine and send a first piece of information about the display of data on said first display, a server is adapted to receive said first piece of information, to determine said progression information depending on said piece of information, and to send said progression information to said first device or a second device, a second device is adapted, to receive and display said progression information.

8. A server for providing progression information in a communications network, **adapted to** receive a first piece of information about the display of data on said first display, to determine said progression information depending on said piece of information, and to send said progression information, to a first device or a second device.

9. A first device for providing progression information in a communications network, **adapted** to determine and send a first piece of information about the display of data on said first display.

10. A second device for providing progression information in a communications network, **adapted to** receive and display said progression information.

11. A computer program for providing progression information in a communications network, **wherein** said computer program, when executed on a computer, causes the computer to determine said progression information depending on a piece of information, about, the display of data any first device, and to provide said progression information in particular to said first device, a server or a second device.

12. A computer program product for distributing progression information in a communications network comprising a computer usable medium having a computer readable program, **wherein** said computer readable program, when executed on a computer, causes the computer to determine said progression information depending on a piece of information about the display of data on a first device, and to provide, said progression information in particular to said first device, a server or a second device.

## Amended claims

### Amended claims in accordance with Rule 137(2) EPC.

**1.** A method for providing progression information in a communications network, wherein said progression information is determined depending on a piece of information about the display of data on a first device, and wherein said progression information is provided in particular to said first device, a server or a second device, **characterized in that** said first device and a second device share said progression information with each other.

**2.** The method according to claim 1, wherein said piece of information is sent by said first device to a server and wherein said progression information is determined by said server, and wherin said progression information is sent to said second device by said server.

**3.** The method according to claim 1, wherein said progression information is determined by said first device and wherein said progression information is sent from said first device to said server or to said second device.

**4.** The method according to claim 1, wherein said progression information is determined depending on the time said data is displayed on said first device.

**5.** The method according to claim 1, wherein said progression information is determined depending on the data that is displayed on said first device.

**6.** The method according to claim 1, wherein a request to provide said progression information regarding said first device, in particular sent by said second device, is answered, in particular by said first device or said server, by sending said progression information.

**7.** A system for providing progression information in a communications network, wherein a first device is adapted to determine and send a first piece of information about the display of data on said first device, a server is adapted to receive said first piece of information, to determine said progression information depending on said piece of information, and to send said progression information to said first device or a second device, wherein said second device is adapted to receive and display said progression information **characterized in that** said first device and said second device are adapted to share said progression information with each other.

**8.** A server for providing progression information in a communications network, adapted to receive a first piece of information about the display of data on a first device, to determine said progression information depending on said piece of information, **characterized in that** said server is adapted to distribute said progression information to said first device and a second device sharing said progression information with each other [S.8 Z. 13].

**9.** A first device for providing progression information in a communications network, adapted to determine and send a first piece of information about the display of data on said first device **characterized in that** said first device is adapted to connect to a second device, wherein said first device and said second device share said progression information with each other.

**10.** The first device according to claim 9, **characterized in that** said first device is adapted to receive and display said progression information.

**11.** A computer program for providing progression information in a communications network, wherein said computer program, when executed on a computer, causes the computer to determine said progression information depending on a piece of information about the display of data on a first device, and to provide said progression information in particular to said first device, a server or a second device, **characterized in that** said computer program causes said first device and a second device to share said progression information with each other.

**12.** A computer program product for distributing progression information in a communications network comprising a computer usable medium having a computer readable program, wherein said computer readable program, when executed on a computer, causes the computer to determine said progression information depending on a piece of information about the display of data on a first device, and to provide said progression information in particular to said first device, a server or a second device, **characterized in that** said computer program causes said first device and a second device to share said progression information with each other.
